(19) **Europäisches Patentamt / European Patent Office / Office européen des brevets**

(11) **EP 2 645 047 B1**

(12) **EUROPEAN PATENT SPECIFICATION**

(45) Date of publication and mention
of the grant of the patent:
**09.05.2018 Bulletin 2018/19**

(51) Int Cl.:
*F41H 11/02* (2006.01)  *F41G 3/06* (2006.01)
*F41G 3/08* (2006.01)  *F41G 5/08* (2006.01)

(21) Application number: **11842701.2**

(22) Date of filing: **30.06.2011**

(86) International application number:
**PCT/CN2011/076636**

(87) International publication number:
**WO 2012/068877 (31.05.2012 Gazette 2012/22)**

(54) **LOW-ALTITUDE LOW-SPEED SMALL TARGET INTERCEPTING METHOD BASED ON FIRING TABLE FITTING**

VERFAHREN ZUM ABFANGEN KLEINER ZIELE IN NIEDRIGER HÖHE UND MIT NIEDRIGER GESCHWINDIGKEIT AUF BASIS DER MONTAGE EINES ABSCHUSSTISCHES

PROCÉDÉ D'INTERCEPTION DE PETITE CIBLE VOLANT À FAIBLE VITESSE ET À FAIBLE ALTITUDE SUR LA BASE D'UN AJUSTEMENT DE TABLE DE TIR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2010 CN 201010553163**

(43) Date of publication of application:
**02.10.2013 Bulletin 2013/40**

(73) Proprietor: **Beijing Mechanical Equipment Institute**
**Beijing 100854 (CN)**

(72) Inventors:
• **DING, Xuchang**
**Beijing 100854 (CN)**
• **XU, Nuo**
**Beijing 100854 (CN)**
• **WANG, Shengjie**
**Beijing 100854 (CN)**
• **SHEN, Yan**
**Beijing 100854 (CN)**

• **WANG, Lianjun**
**Beijing 100854 (CN)**
• **WANG, Xiaojun**
**Beijing 100854 (CN)**
• **LI, Jiahui**
**Beijing 100854 (CN)**
• **YAN, Hongliang**
**Beijing 100854 (CN)**

(74) Representative: **Gulde & Partner**
**Patent- und Rechtsanwaltskanzlei mbB**
**Wallstraße 58/59**
**10179 Berlin (DE)**

(56) References cited:
**WO-A1-2009/045573  WO-A2-2006/079029**
**WO-A2-2008/029392  CN-A- 1 527 020**
**CN-A- 101 392 999  CN-A- 102 087 082**
**GB-A- 2 136 097  US-A- 4 020 407**
**US-A- 4 146 780  US-A- 4 283 989**

## EP 2 645 047 B1

**Description**

CROSS-REFERENCE TO RELATED APPLICATIONS

The present application is U.S. Patent Application for a U.S. national stage of PCT/CN2011/076636, filed June 30, 2011, which claims priority to Chinese Patent Application No. 201010553163.4, filed November 22, 2010.

FIELD

The present disclosure relates to a method for intercepting a target in airspace, and more particularly to a method based on firing table fitting for intercepting a small target with low altitude and low velocity.

BACKGROUND

A small target with low altitude and low velocity primarily constitutes a threat or destructive attack to important activities or large-scale gatherings. Because there is no effective means to defense such type of target, conventional weapons such as a shotgun or large weapons such as an anti-aircraft gun and an anti-aircraft missile are generally used to carry out security defence.

US 4 146 780 A discloses a fire control apparatus for an anti-aircraft weapons system, The fire control apparatus incudes manual means for inputting both estimated roll angles and load factors of a maneuvering target aircraft into a fire control computer. The computer first calculates linearly projected future positions of the target aircraft. Corrections to these projected positions are then calculated from the inputted estimates of aircraft roll angle and load factor. The fire control computer combines this correction with the linearly calculated future positions. Control signals corresponding to these new intercept positions are transmitted from the computer to conventional gun laying means to cause the gun to be aimed at the intercept positions.

GB 2 136 097 A discloses a target-tracking intercepting control system. For mobile anti-defence systems, fire or launch control is effected from information derived from a plurality of target sensors and follow-up for controlling one or more weapon systems. The weapon follow-up is carried out taking into account a lead-angle value that is calculated by one or more lead-angle computer units. In order to decentralize the system, the computer units are designed as individual system components. The follow-up computer units and the lead-angle computer units can be coordinatedin respect of various functions by means of the operating mode computer, and extra computer units may be included to improve reliability and facilitate servicing and system monitoring.

US 4 283 989 A discloses Doppler-Type projectile velocity measurement and communication apparatus and method. Projectile velocity measurement and communication apparatus comprises a microwave probe fixed to a projectile barrel near a muzzle end. An oscillator, having a reference frequency selected for exciting a fundamental electromagnetic mode in the barrel, is connected to the probe through a hybrid mixer configured for extracting, from moving projectile-reflected microwaves, a true Doppler signal having a varying frequency related to projectile barrel velocity.

US 4 020 407 A discloses a control system for tracking a moving target. The control system comprises digital circuitry for determining the aiming angle required to aim the gun directly at the target and for determining an aiming angle correction which provides for leading the target by an amount such that a projectile fired by the gun will strike the target. The control system further includes a pair of motros controlled by the digital circuitry, one of which positions the gun to lead the target by a calculated aiming angle correction and the other of which positions, in a generic sense, the telescope an angular amount equal to the aiming angle correction behind the gun.

However, above methods have following disadvantages.

(1) a shooting scale of a firearm is limited, and a quality requirement to an operator is high, and thus it is difficult to ensure an effective interception to a target in airspace.

(2) a single shot probability of the anti-aircraft gun is relative low so that generally multiple anti-aircraft gun cooperation and multiple continuous shooting are required in order to shoot the target.

(3) although a single shot probability of the anti-aircraft missile is high, usage and maintenance costs are relative high to cause a low ROI (return on investment).

(4) all above weapons are destructive so that it is not suitable to be used in crowed areas. Moreover, a noise, a flash and a smoke given by the weapons at a moment of shooting may cause a scare and wreckages of the weapons may endanger people.

Therefore, with a principle of ballistic attack of the anti-aircraft gun and a method for controlling firepower, influences of the noise, the flash and the smoke given by the weapons at a moment of shooting on an environment is reduced, an attack mode of a warhead is thus changed, and a special requirement of an usage environment may be satisfied. However, a single shot probability of the method is relative low under a case of low shooting speed of a bullet, and it is impossible to perform a time sequence control on a non-controlled bomb fight flow and the warhead.

SUMMARY

The present disclosure is aimed to provide a method based on firing table fitting for intercepting a small target with low altitude and low velocity to solve problems of low single shot probability of an anti-aircraft gun and no time sequence control on a non-controlled bomb fight flow and a warhead.

A method based on firing table fitting for intercepting a small target with low altitude and low velocity is realized by a turret type intercepting system. The system comprises: a target detecting system, a directing control system, a launch control system, an interception conduct system, a communication bus a, a communication bus b and a communication bus c. The target detecting system is connected with the directing control system via the communication bus a, the launch control system is connected with the directing control system via the communication bus b, a firing table is mounted in a fire control computer of the launch control system, and the interception conduct system is connected with the launch control system via the communication bus c.

The method comprises steps of:

step 1, obtaining target data information by the target detecting system, comprising:
determining a target state and obtaining a target flight data including a flight height, a distance, an azimuth angle and a pitch angle by the target detecting system, sending the target state and the target flight data to the directing control system via the communication bus a, sending the target flight data and environment condition parameters including a temperature, an altitude, a wind speed and a wind direction to the launch control system via the communication bus b by the directing control system;

step 2, predicting a lead aiming point by the launch control system, comprising:

calculating a flight path of the target by the fire control computer of the launch control system based on the target flight data and environment condition parameters received, and calculation formulas as:

$$V_x = \frac{dx}{dt} = \frac{dD_S}{dt}\cos\varepsilon_S\cos\beta_S - \frac{d\varepsilon_S}{dt}D_S\sin\varepsilon_S\cos\beta_S - \frac{d\beta_S}{dt}D_S\cos\varepsilon_S\sin\beta_S \qquad (1)$$

$$V_y = \frac{dy}{dt} = \frac{dD_S}{dt}\cos\varepsilon_S\sin\beta_S - \frac{d\varepsilon_S}{dt}D_S\sin\varepsilon_S\sin\beta_S + \frac{d\beta_S}{dt}D_S\cos\varepsilon_S\cos\beta_S \qquad (2)$$

$$V_z = \frac{dz}{dt} = \frac{dD_S}{dt}\sin\varepsilon_S + \frac{d\varepsilon_S}{dt}D_S\cos\varepsilon_S \qquad (3)$$

where $D_S$ is a target slant range, $\varepsilon_S$ is a target pitch angle, and $\beta_S$ is a target azimuth angle;

predicting a lead aiming point of a flight of the target with a three-dimensional spatial calculation by the launch control system, and a calculation formula as:

$$\begin{cases} D\cos\varepsilon\cos\beta - D_S\cos\varepsilon_S - V_x\cdot t_f = 0 \\ D\sin\varepsilon - D_S\sin\varepsilon_S - V_y\cdot t_f = 0 \\ D\cos\varepsilon\sin\beta - V_z\cdot t_f = 0 \\ t_f = f(D) \end{cases} \qquad (4)$$

where a subscript "s" represents an initial position, D is a target slant range of the lead aiming point, $\varepsilon$ is a target

pitch angle of the lead aiming point, $\beta$ is a target azimuth angle of the lead aiming point, and a flight time $t_f$ is determined according to an estimated value in a prestored firing table and is a function of D;

step 3, controlling a time sequence of each stage of a fight flow by the launch control system, comprising:

after an extraction of an aerodynamics parameter and a statistical comparison of an actual ballistic experimental data based on multi-projection angle and multi-environment working condition, obtaining firing table data under both a standard weather condition and a nonstandard weather condition, prestoring the firing table data under the standard weather condition by the launch control system, and according to different environmental influence factors including the temperature, the altitude, the wind speed and the wind direction, storing the firing table data under the nonstandard weather condition by means of fitting parameters;

searching a corresponding fitting parameter according to the environmental influence factors by the fire control computer of the launch control system, obtaining an actual working condition firing table from a prestored standard firing table, inquiring the firing table according to the lead aiming point calculated by the launch control system to complete an interpolation calculation, thus obtaining an encounter time between a bullet and the target, a response time of the interception conduct system and a start time of a warhead for binding a missile-borne computer;

step 4, outputting firing data to conduct an interception by the launch control system, comprising:
according to the lead aiming point, using a spatial grid obtained from the firing table data to determine an effective intercepting ballistic trajectory by the fire control computer of the launch control system, outputting the firing data subsequent to a comparison of an initial position of the interception conduct system, sending the firing data to the interception conduct system via the communication bus c, the launch control system entering a nonreversible launch flow, and outputting a firing current to start launching by a launch conduct structure in the launch control system.

Up to now, the interception of the small target with low altitude and low velocity based on firing table fitting is completed.

With the method according to embodiments of the present disclosure, an interception and an operation of the small target with low altitude and low velocity is simplified, a ground control of a non-controlled bomb fight flow is realized, a single shot probability of an interception system is increased, and an interception cost is lowered.

DETAILED DESCRIPTION

A method based on firing table fitting for intercepting a small target with low altitude and low velocity is realized by a turret type intercepting system. The system comprises: a target detecting system, a directing control system, a launch control system, an interception conduct system, a communication bus a, a communication bus b and a communication bus c. The target detecting system is connected with the directing control system via the communication bus a, the launch control system is connected with the directing control system via the communication bus b, a firing table is mounted in a fire control computer of the launch control system, and the interception conduct system is connected with the launch control system via the communication bus c.

The method comprises following steps.

In step 1, target data information is obtained by the target detecting system.

Specifically, a target state is determined and a target flight data is obtained by the target detecting system. The target flight data includes: a flight height, a distance, an azimuth angle and a pitch angle. Then the target state and the target flight data are sent to the directing control system via the communication bus a. Then the target flight data and environment condition parameters including a temperature, an altitude, a wind speed and a wind direction are sent to the launch control system via the communication bus b by the directing control system.

In step 2, a lead aiming point is predicted by the launch control system.

Specifically, a flight path of the target is calculated by the fire control computer based on the target flight data and environment condition parameters received. Calculation formulas may be as follows:

$$V_x = \frac{dx}{dt} = \frac{dD_S}{dt} \cos \varepsilon_S \cos \beta_S - \frac{d\varepsilon_S}{dt} D_S \sin \varepsilon_S \cos \beta_S - \frac{d\beta_S}{dt} D_S \cos \varepsilon_S \sin \beta_S \qquad (1)$$

$$V_y = \frac{dy}{dt} = \frac{dD_S}{dt} \cos \varepsilon_S \sin \beta_S - \frac{d\varepsilon_S}{dt} D_S \sin \varepsilon_S \sin \beta_S + \frac{d\beta_S}{dt} D_S \cos \varepsilon_S \cos \beta_S \qquad (2)$$

$$V_z = \frac{dz}{dt} = \frac{dD_S}{dt} \sin \varepsilon_S + \frac{d\varepsilon_S}{dt} D_S \cos \varepsilon_S \qquad (3)$$

where $D_S$ is a target slant range, $\varepsilon_S$ is a target pitch angle, and $\beta_S$ is a target azimuth angle.

Then, a lead aiming point of a flight of the target is predicted with a three-dimensional spatial calculation by the launch control system. A calculation formula may be as follows:

$$\begin{cases} D \cos \varepsilon \cos \beta - D_S \cos \varepsilon_S - V_x \cdot t_f = 0 \\ D \sin \varepsilon - D_S \sin \varepsilon_S - V_y \cdot t_f = 0 \\ D \cos \varepsilon \sin \beta - V_z \cdot t_f = 0 \\ t_f = f(D) \end{cases} \qquad (4)$$

where a subscript "s" represents an initial position, D is a target slant range of the lead aiming point, $\varepsilon$ is a target pitch angle of the lead aiming point, $\beta$ is a target azimuth angle of the lead aiming point, and a flight time $t_f$ is determined according to an estimated value in a prestored firing table and is a function of D.

In step 3, a time sequence of each stage of a fight flow is controlled by the launch control system.

Specifically, after an extraction of an aerodynamics parameter and a statistical comparison of an actual ballistic experimental data based on multi-projection angle and multi-environment working condition, firing table data under both a standard weather condition and a nonstandard weather condition is obtained. Then only the firing table data under the standard weather condition is prestored by the launch control system. According to different environmental influence factors including the temperature, the altitude, the wind speed and the wind direction, the firing table data under the nonstandard weather condition is stored by means of fitting parameters.

Then a corresponding fitting parameter is searched according to the environmental influence factors by the fire control computer. Then an actual working condition firing table is obtained from a prestored standard firing table. Then the firing table is inquired according to the lead aiming point to complete an interpolation calculation, thus obtaining an encounter time between a bullet and the target, a response time of the interception conduct system and a start time of a warhead for binding a missile-borne computer.

In step 4, firing data is output to conduct an interception by the launch control system.

Specifically, according to the lead aiming point, a spatial grid obtained from the firing table data is used to determine an effective intercepting ballistic trajectory by the fire control computer. Then the firing data is output subsequent to a comparison of an initial position of the interception conduct system. Then the firing data is sent to the interception conduct system via the communication bus c. Finally, the launch control system enters a nonreversible launch flow, and a firing current is output to start launching by a launch conduct structure in the launch control system.

Up to now, the interception of the small target with low altitude and low velocity based on firing table fitting is completed.

**Claims**

1.  A method based on a firing table mounted in a fire control computer of a launch control system fitting for intercepting a small target with low altitude and low velocity by a turret type intercepting system, comprises steps of:

    • step 1, obtaining target data information by a target detecting system, comprising:

        determining a target state and obtaining a target flight data including a flight height, a distance, an azimuth angle and a pitch angle by the target detecting system, sending the target state and the target flight data to a directing control system connected with target detecting system via a communication bus a,
        sending the target flight data and environment condition parameters including a temperature, an altitude, a wind speed and a wind direction to the launch control system connected with the directing control system via a communication bus b by the directing control system;

• step 2, predicting a lead aiming point by the launch control system, comprising:

calculating a flight path of the target by the fire control computer based on the target flight data and environment condition parameters received, and calculation formulas as:

$$V_x = \frac{dx}{dt} = \frac{dD_S}{dt}\cos\varepsilon_S\cos\beta_S - \frac{d\varepsilon_S}{dt}D_S\sin\varepsilon_S\cos\beta_S - \frac{d\beta_S}{dt}D_S\cos\varepsilon_S\sin\beta_S \quad (1)$$

$$V_y = \frac{dy}{dt} = \frac{dD_S}{dt}\cos\varepsilon_S\sin\beta_S - \frac{d\varepsilon_S}{dt}D_S\sin\varepsilon_S\sin\beta_S + \frac{d\beta_S}{dt}D_S\cos\varepsilon_S\cos\beta_S \quad (2)$$

$$V_z = \frac{dz}{dt} = \frac{dD_S}{dt}\sin\varepsilon_S + \frac{d\varepsilon_S}{dt}D_S\cos\varepsilon_S \quad (3)$$

where $D_S$ is a target slant range, $\varepsilon_S$ is a target pitch angle, and $\beta_S$ is a target azimuth angle;
predicting a lead aiming point of a flight of the target with a three-dimensional spatial calculation by the launch control system, and a calculation formula as:

$$\begin{cases} D\cos\varepsilon\cos\beta - D_S\cos\varepsilon_S - V_x\cdot t_f = 0 \\ D\sin\varepsilon - D_S\sin\varepsilon_S - V_y\cdot t_f = 0 \\ D\cos\varepsilon\sin\beta - V_z\cdot t_f = 0 \\ t_f = f(D) \end{cases} \quad (4)$$

where a subscript "s" represents an initial position, D is a target slant range of the lead aiming point, $\varepsilon$ is a target pitch angle of the lead aiming point, $\beta$ is a target azimuth angle of the lead aiming point and a flight time $t_f$ is determined according to an estimated value in a prestored firing table and is a function of D; **characterized in that**;

• step 3, controlling a time sequence of each stage of a fight flow by the launch control system, comprising:

after an extraction of an aerodynamics parameter and a statistical comparison of an actual ballistic experimental data based on multi-projection angle and multi-environment working condition, obtaining firing table data under both a standard weather condition and a nonstandard weather condition, prestoring the firing table data under the standard weather condition by the launch control system, and according to different environmental influence factors including the temperature, the altitude, the wind speed and the wind direction, storing the firing table data under the nonstandard weather condition by means of fitting parameters; searching a corresponding fitting parameter according to the environmental influence factors by the fire control computer, obtaining an actual working condition firing table from a prestored standard firing table, inquiring the firing table according to the lead aiming point to complete an interpolation calculation, thus obtaining an encounter time between a bullet and the target, a response time of an interception conduct system connected with the launch control system via a communication bus c, and a start time of a warhead for binding a missile-borne computer;

• step 4, outputting firing data to conduct an interception by the launch control system, comprising:
according to the lead aiming point, using a spatial grid obtained from the firing table data to determine an effective intercepting ballistic trajectory by the fire control computer, outputting the firing data subsequent to a comparison of an initial position of the interception conduct system, sending the firing data to the interception conduct system via the communication bus c, the launch control system entering a nonreversible launch flow, and outputting a firing current to start launching by a launch conduct structure in the launch control system.

**Patentansprüche**

1. Ein Verfahren auf Basis eines Abschusstisches, der in einem Feuerleitrechner eines Startsteuersystems montiert ist, angepasst zum Abfangen eines kleinen Ziels in niedriger Höhe und mit niedriger Geschwindigkeit durch ein turmartiges Abfangsystem, weist die folgenden Schritte auf:

   • Schritt 1, Erhalten von Zieldateninformationen durch ein Zielerkennungssystem, aufweisend:

   Bestimmen eines Zielzustands und Erhalten von Zielflugdaten, die eine Flughöhe, eine Entfernung, einen Azimutwinkel und einen Steigungswinkel aufweisen, durch das Zielerkennungssystem, Senden des Zielzustands und der Zielflugdaten an ein Lenksteuersystem, das über einen Kommunikationsbus a mit dem Zielerkennungssystem verbunden ist,
   Senden der Zielflugdaten und von Umweltbedingungsparametern, enthaltend eine Temperatur, eine Höhe, eine Windgeschwindigkeit und eine Windrichtun, an das Startsteuersystem, das über einen Kommunikationsbus b mit dem Lenksteuersystem verbunden ist, durch das Lenksteuersystem;

   • Schritt 2, Voraussagen eines Vorhaltezielpunkts durch das Startsteuersystem, aufweisend:

   Berechnen einer Flugbahn des Ziels durch den Feuerleitrechner auf Basis der empfangenen Zielflugdaten und Umweltbedingungsparameter und einer Berechnungsformel wie:

$$V_x = \frac{dx}{dt} = \frac{dD_S}{dt}\cos\varepsilon_S\cos\beta_S - \frac{d\varepsilon_S}{dt}D_S\sin\varepsilon_S\cos\beta_S - \frac{d\beta_S}{dt}D_S\cos\varepsilon_S\sin\beta_S \quad (1)$$

$$V_y = \frac{dy}{dt} = \frac{dD_S}{dt}\cos\varepsilon_S\sin\beta_S - \frac{d\varepsilon_S}{dt}D_S\sin\varepsilon_S\sin\beta_S + \frac{d\beta_S}{dt}D_S\cos\varepsilon_S\cos\beta_S \quad (2)$$

$$V_z = \frac{dz}{dt} = \frac{dD_S}{dt}\sin\varepsilon_S + \frac{d\varepsilon_S}{dt}D_S\cos\varepsilon_S \quad (3)$$

   wobei $D_S$ eine Zielschrägentfernung ist, $\varepsilon_S$ ein Zielsteigungswinkel ist und $\beta_S$ ein Zielazimutwinkel ist;
   Voraussagen eines Vorhaltezielpunkts eines Flugs des Ziels mit einer dreidimensionalen räumlichen Berechnung durch das Startsteuersystem und einer Berechnungsformel wie:

$$\begin{cases} D\cos\varepsilon\cos\beta - D_S\cos\varepsilon_S - V_x \cdot t_f = 0 \\ D\sin\varepsilon - D_S\sin\varepsilon_S - V_y \cdot t_f = 0 \\ D\cos\varepsilon\sin\beta - V_z \cdot t_f = 0 \\ t_f = f(D) \end{cases} \quad (4)$$

   wobei ein tiefgestelltes "s" eine Anfangsposition darstellt, D eine Zielschrägentfernung des Vorhalteziel-punkts ist, $\varepsilon$ ein Zielsteigungswinkel des Vorhaltezielpunkts ist, $\beta$ ein Zielazimutwinkel des Zielvorhaltepunkts ist und eine Flugzeit $t_f$ gemäß einem geschätzten Wert in einem vorgespeicherten Abschusstisch bestimmt wird und eine Funktion von D ist;

   **dadurch gekennzeichnet, dass**:
   • Schritt 3, Steuern einer Zeitfolge jeder Etappe eines Kampfflusses durch das Startsteuersystem, aufweisend:

   nach einer Extraktion eines Aerodynamikparameters und eines statistischen Vergleichs von aktuellen ballistischen Versuchsdaten auf Basis eines Multi-Projektionswinkels und einer Multi-Umweltarbeitsbedingung, Erhalten von Abschusstischdaten unter sowohl einer standardmäßigen Witterungsbedingung als auch einer nicht standardmäßigen Witterungsbedingung, Vorspeichern der Abschusstischdaten unter der standardmäßigen Witterungsbedingung durch das Startsteuersystem und enthaltend gemäß verschiedener Umwelteinflussfaktoren, die Temperatur, die Höhe, die Windgeschwindigkeit und die Windrichtung, Speichern der Abschusstischdaten unter der nicht standardmäßigen Witterungsbedingung durch Anpassungsparameter;

Suchen eines entsprechenden Anpassungsparameters gemäß den Umwelteinflussfaktoren durch den Feuerleitrechner, Erhalten eines Abschusstisches mit einer aktuellen Arbeitsbedingung von einem vorgespeicherten Standard-Abschusstisch, Befragen des Abschusstisches gemäß dem Vorhaltezielpunkt, um eine Interpolationsberechnung abzuschließen, dadurch Erhalten einer Begegnungszeit zwischen einem Projektil und dem Ziel, einer Antwortzeit eines Abfangdurchführungssystems, das über einen Kommunikationsbus c mit dem Startsteuersystem verbunden ist, und einer Startzeit eines Sprengkopfes zum Binden eines flugkörpergetragenen Rechners;

• Schritt 4, Ausgeben von Abschussdaten zum Durchführen eines Abfangens durch das Startsteuersystem, aufweisend:

gemäß dem Vorhaltezielpunkt Verwenden eines Raumgitters, das von den Abschusstischdaten erhalten wurde, zum Bestimmen einer effektiven ballistischen Abfangflugbahn durch den Feuerleitrechner, Ausgeben der Abschussdaten nach einem Vergleich einer Anfangsposition des Abfangdurchführungssystems, Senden der Abschussdaten an das Abfangdurchführungssystem über den Kommunikationsbus c, wobei das Startsteuersystem einen nicht reversiblen Startfluss eingibt, und Ausgeben eines Abschussstroms zum Starten des Abfangens durch eine Startdurchführungsstruktur im Startsteuersystem.

## Revendications

1. Un procédé sur la base d'une table de tir montée dans un ordinateur de conduite de tir d'un système de commande de lancement adaptée pour intercepter une petite cible à faible altitude et à faible vitesse par un système d'interception du type à tourelle comprend les étapes suivantes :

• étape 1, obtenir des informations de données de cible par un système de détection de cible, comprenant:

déterminer un état de cible et obtenir des données de vol de cible comprenant une altitude de vol, une distance, un angle d'azimut et un angle d'inclinaison par le système de détection de cible, envoyer l'état de cible et les données de vol de cible à un système de commande de direction connecté au système de détection de cible par un bus de communication a,

envoyer, par le système de commande de direction, les données de vol de cible et des paramètres de condition d'environnement comprenant une température, une altitude, une vitesse du vent et une direction du vent au système de commande de lancement connecté au système de commande de direction par un bus de communication b;

• étape 2, estimer à l'avance un point de visée par le système de commande de lancement, comprenant:

calculer une trajectoire de vol de la cible par l'ordinateur de conduite de tir sur la base des données de vol de cible et des paramètres de condition d'environnement reçus et une formule de calcul comme suit:

$$V_x = \frac{dx}{dt} = \frac{dD_s}{dt}\cos\varepsilon_s\cos\beta_s - \frac{d\varepsilon_s}{dt}D_s\sin\varepsilon_s\cos\beta_s - \frac{d\beta_s}{dt}D_s\cos\varepsilon_s\sin\beta_s \quad (1)$$

$$V_y = \frac{dy}{dt} = \frac{dD_s}{dt}\cos\varepsilon_s\sin\beta_s - \frac{d\varepsilon_s}{dt}D_s\sin\varepsilon_s\sin\beta_s + \frac{d\beta_s}{dt}D_s\cos\varepsilon_s\cos\beta_s \quad (2)$$

$$V_z = \frac{dz}{dt} = \frac{dD_s}{dt}\sin\varepsilon_s + \frac{d\varepsilon_s}{dt}D_s\cos\varepsilon_s \quad (3)$$

$D_S$ étant une distance oblique de cible, $\varepsilon_S$ étant un angle d'inclinaison de cible, et $\beta_S$ étant un angle d'azimut de cible;
estimer à l'avance un point de visée d'un vol de la cible par un calcul spatial tridimensionnel par le système de commande de lancement et une formule de calcul comme suit:

$$\begin{cases} D\cos\varepsilon\cos\beta - D_S\cos\varepsilon_S - V_x\cdot t_f = 0 \\ D\sin\varepsilon - D_S\sin\varepsilon_S - V_y\cdot t_f = 0 \\ D\cos\varepsilon\sin\beta - V_z\cdot t_f = 0 \\ t_f = f(D) \end{cases} \qquad (4)$$

un « s » en indice représentant une position initiale, D étant une distance oblique de cible du point de visée, $\varepsilon$ étant un angle d'inclinaison du point de visée, $\beta$ étant un angle d'azimut de cible du point de visée, et un temps de vol $t_f$ étant déterminé selon une valeur estimée dans une table de tir préenregistrée et étant une fonction de D;

**caractérisé en ce que**:

• étape 3, commander une séquence de temps de chaque étape d'un flux de combat par le système de commande de lancement, comprenant :

après une extraction d'un paramètre aérodynamique et une comparaison statistique de données expérimentales balistiques actuelles sur la base d'un angle de multi-projection et de multiples conditions de travail environnementales, obtenir des données de table de tir dans et une condition météorologique standard et une condition météorologique non standard, préenregistrer la table de tir dans la condition météorologique standard par le système de commande de lancement, et, selon de différents facteurs d'influence environnementale comprenant la température, l'altitude, la vitesse du vent et la direction du vent, enregistrer les données de table de tir dans la condition météorologique non standard par des paramètres d'ajustement; chercher un paramètre d'ajustement correspondant selon les facteurs d'influence environnementale par l'ordinateur de conduite de tir, obtenir une table de tir de condition de travail actuelle à partir d'une table de tir standard préenregistrée, interroger la table de tir selon le point de visée afin de compléter un calcul d'interpolation, obtenir ainsi un temps de collision entre un projectile et la cible, un temps de réponse d'un système d'exécution d'interception connecté au système de commande de lancement par un bus de communication c, et un temps de départ d'une ogive explosive pour relier un ordinateur porté par un missile;

• étape 4, délivrer des données de tir pour exécuter une interception par le système de commande de lancement, comprenant:

selon le point de visée, utiliser une grille spatiale obtenue à partir des données de table de tir pour déterminer une trajectoire d'interception balistique effective par l'ordinateur de conduite de tir, délivrer les données de tir suite à une comparaison d'une position initiale du système d'exécution d'interception, envoyer les données de tir au système d'exécution d'interception par le bus de communication c, le système de commande de lancement entrant un flux de lancement irréversible, et délivrer un courant de tir afin de commencer le lancement par une structure d'exécution de lancement dans le système de commande de lancement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2011076636 W
- CN 201010553163
- US 4146780 A
- GB 2136097 A
- US 4283989 A
- US 4020407 A